# EUROPEAN PATENT APPLICATION

(11) **EP 3 824 993 A2**
(43) Date of publication of application: **26.05.2021**
(21) Application number: 20216496.8
(22) Date of filing: 08.09.2017
(51) Int. Cl.: B01D 67/00, B01D 71/02, B01D 69/10, B01D 69/12, B01D 65/08, B01D 69/14, C08J 7/04, C08J 7/048, B01D 61/02

(54) **GRAPHENE OXIDE ANTI-MICROBIAL ELEMENT**

(30) Priority: 08.09.2016 US 201662385025 P
(62) Divisional of application: 17781225.2
(71) Applicant: Nitto Denko Corporation, Ibaraki-shi, Osaka 567-8680 (JP)
(72) Inventor: ZHENG, Shijun, San Diego, California 92129 (US); HSIEH, Wanyun, San Diego, California 92126 (US); KITAHARA, Isamu, San Diego, California 92130 (US); ERICSON, John, La Palma, California 90623 (US); KOBUKE, Makoto, Ibaraki-shi, Osaka 567-8680 (JP); WANG, Peng, San Diego, California 92128 (US)
(74) Representative: Mitchell, Simon James

(57) **Abstract**

Described herein is a graphene material and polymer-based anti-microbial element that provides anti-microbial capabilities. Described is an element that can also comprise a support. Also described is an element where the support can be the article to be protected from microbial buildup. Also described are methods for preventing microbial fouling by applying the aforementioned anti-microbial elements and related devices.

## Description

### BACKGROUND

### Field of Invention

The present embodiments are related to polymeric membranes, and provide a membrane including graphene oxide materials with anti-microbial properties.

### Description of Related Art

The growth of microbes in today's society can present serious issues in applications where the level of microbes must be controlled. In applications such as heath industry and in water delivery, treatment, and filtration, the growth of microbes to unhealthy levels can result in widespread sickness. Additionally, the growth of microbes in water filtration and delivery apparatuses can also result in biological fouling, reducing the effective lifespan of the equipment. In Heating, Ventilation, and Air Conditioning (HVAC) systems, microbes multiplying in the moist air ducts can lead to foul odor and health problems if left untreated. Also, for vessels in water, unchecked growth of microbes on the vessel's wetted area can reduce the hydrodynamic efficiency of the hull by disrupting the hull shape and creating drag thereby reducing fuel efficiency.

While there are means for controlling microbes through photo-catalysts, such means require external energy sources such as a source of ultraviolent light to be effective.

As a result, there is a need for a passive means of controlling microbe growth.

### SUMMARY

The present embodiments, a graphene oxide ("GO") polymeric membrane, may reduce the presence of microbes.

In some embodiments, an anti-microbial membrane is described, comprising: (1) a support, and (2) a composite comprising a graphene oxide compound and a polyvinyl alcohol, where the composite can coat the support; wherein the membrane can preclude the growth of microbes as determined by having an antibacterial effectiveness of 2.0 or more. In some embodiments, the mass ratio of graphene oxide to polyvinyl alcohol in the composite can be a value ranging from 1:1000 to 10:1. In some embodiments, the support can be the article to be protected from microbial growth.

In some embodiments, a method of preventing microbial growth is described, the method comprising: (1) providing the aforedescribed membrane and (2) exposing the membrane to a working fluid containing microbes, whereby the membrane can preclude microbial growth as a result of exposure to the working fluid as determined by having an antibacterial effectiveness of 2.0 or more. In some embodiments, providing the aforedescribed membrane can comprise coating said membrane on the surface to be protected. In some embodiments, the mass ratio of graphene oxide to polyvinyl alcohol in the composite can be a value ranging from 1:1000 to 10:1. In some embodiments, the support can comprise the article to be protected from microbial growth.

These and other embodiments are described in greater detail below.

### BRIEF DESCRIPTION OF THE DRAWINGS

FIG. 1 is a depiction of one possible embodiment of an anti-microbial membrane that may be used in anti-microbial applications.
FIG. 2 is another possible embodiment of an anti-microbial membrane where the support forms a part of the object to be protected; the support being the hull of a boat.
FIG. 3 is yet another possible embodiment of an anti-microbial membrane where the support as part of the object protected; the support being a reverse osmosis membrane.
FIG. 4 is a depiction of possible method embodiment(s) for preventing microbial growth and/or microbial fouling. The solid lines indicate a possible embodiment and the dashed lines indicate a more specific possible embodiment of the method for preventing microbial growth.

### DETAILED DESCRIPTION

As referred to herein, microbe growth preclusion can be measured by the methods used in JIS Z 2801:2012 (English Version pub. Sep. 2012) where successful preclusion is defined as an antibacterial activity of 2.0 or higher.

As used herein, the term "selective permeability" refers to a membrane that is relatively permeable for one material and relatively impermeable for another material. For example, a membrane may be relatively permeable to water vapor and relatively impermeable to oxygen and/or nitrogen. The ratio of permeabilities of the different materials may be useful in describing the selective permeability.

### Anti-Microbial Membrane

In some embodiments, an anti-microbial membrane is described. In some embodiments, the membrane can comprise a composite coating. In some embodiments, the membrane can comprise a support and a composite coating on the support material. In some embodiments, the anti-microbial membrane may be selectively permeable. In other embodiments, the membrane is not selectively permeable. In still other embodiments, the membrane is not permeable. In some embodiments, the membrane can have high water vapor permeability. In some embodiments, the membrane may have low water vapor permeability. In some embodiments, the support may be porous. In other embodiments, the support can be non-porous.

In some embodiments the composite coating may comprise a graphene material and a crosslinker material. In some embodiments, the graphene material may be arranged amongst a polymer material. In some embodiments, the crosslinker material can also be a polymer. In some embodiments, the graphene material and the crosslinker material are covalently linked to one another. In some embodiments, the crosslinker material can be the same material as the polymer material.

In some embodiments, the graphene material may be arranged in the polymer material in such a manner as to create an exfoliated nanocomposite, an intercalated nanocomposite, or a phase-separated microcomposite. A phase-separated microcomposite phase may be when, although mixed, the graphene material exists as separate and distinct phases apart from the polymer. An intercalated nanocomposite may be when the polymer compounds begin to intermingle amongst or between the graphene platelets but the graphene material may not be distributed throughout the polymer. In an exfoliated nanocomposite phase the individual graphene platelets may be distributed within or throughout the polymer. An exfoliated nanocomposite phase may be achieved by chemically exfoliating the graphene material by a modified Hummer's method, a process well known to persons of ordinary skill. In some embodiments, the majority of the graphene material may be staggered to create an exfoliated nanocomposite as a dominant material phase. In some embodiments, the graphene material may be separated by about 10 nm, 50 nm, 100 nm to about 500 nm, to about 1 micron.

In some embodiments, the graphene material may be in the form of sheets, planes or flakes. In some embodiments, the graphene material may be in the form of platelets. In some embodiments, the graphene may have a platelet size of about 0.05 µm to about 100 µm. In some embodiments, the graphene material may have a surface area of between about 100 m²/g to about 5000 m²/g. In some embodiments, the graphene material may have a surface area of about 150 m²/g to about 4000 m²/g. In some embodiments the graphene material may have a surface area of about 200 m²/g to about 1000 m²/g, e.g., about 400 m²/g to about 500 m²/g.

In some embodiments, the graphene material may not be modified and may comprise of a non-functionalized graphene base. In some embodiments, the graphene material may comprise a modified graphene. In some embodiments, the modified graphene may comprise a functionalized graphene. In some embodiments, more than about 90%, about 80%, about 70%, about 60% about 50%, about 40%, about 30%, about 20%, about 10% of the graphene may be functionalized. In other embodiments, the majority of graphene material may be functionalized. In still other embodiments, substantially all the graphene material may be functionalized. In some embodiments, the functionalized graphene may comprise a graphene base and functional compound. A graphene may be "functionalized," becoming functionalized graphene when there is one or more types of functional compounds not naturally occurring on GO are substituted instead of hydroxide in the acetic acid groups of one or more hydroxide locations in the graphene matrix. In some embodiments, the graphene base may be selected from reduced graphene oxide and/or graphene oxide. In some embodiments, the graphene base may be selected from: 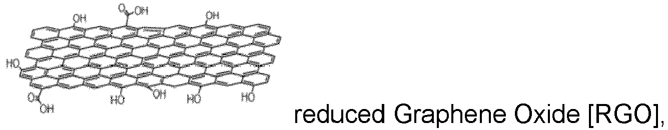 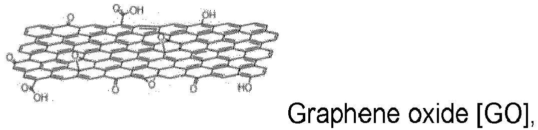 and/or

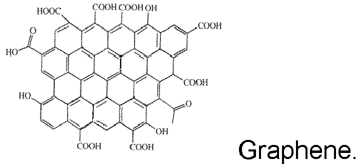

In some embodiments, multiple types of functional compounds are used to functionalize the graphene material in addition to comprising at least one epoxide group. In other embodiments, only one type of functional compound can be utilized. In some embodiments, the functional compounds comprise an epoxide group.

In some embodiments, the epoxide group may comprise a epoxide-based compound having the functional group:

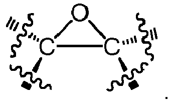

In some embodiments, the epoxide groups can be the by-product of oxidation of the graphene to create graphene oxide. In some embodiments, the epoxide groups are formed on the surface of the graphene base by additional chemical reactions. In some embodiments, the epoxide groups are a mix of those formed during oxidation and those formed by additional chemical reactions.

In some embodiments, the mass percentage of the graphene base relative to the total composition of the graphene containing layer of is between about 0.0001 wt% and about 75 wt%. In some embodiments, the mass percentage of the graphene base relative to the total composition of the graphene material containing layer is between about 0.001 wt% and about 20 wt%. In some embodiments, the mass percentage of the graphene base relative to the total composition of the graphene material containing layer is about 0.1 wt% and about 5 wt%.

In some embodiments, the graphene material may be a crosslinked graphene, where the graphene material may be crosslinked with at least one other graphene base by a crosslinker material/bridge. In some embodiments, the graphene material may comprise crosslinked graphene material where at the graphene bases are crosslinked such that at least about 1 %, about 5 %, about 10 %, about 20 %, about 30 %, about 40 % about 50 %, about 60 %, about 70 %, about 80 %, about 90 %, about 95 %, or all of the graphene material may be crosslinked. In some embodiments, the majority of the graphene material may be crosslinked. In some embodiments, some of the graphene material may be crosslinked such that at least 5 % of the graphene material may be crosslinked with other graphene material. The amount of crosslinking may be estimated by the wt% of the crosslinker/precursor as compared with the total amount of polymer present. In some embodiments, one or more of the graphene base(s) that are crosslinked may also be functionalized. In some embodiments the graphene material may comprise both crosslinked graphene and non-crosslinked, functionalized graphene.

In some embodiments, the adjacent graphene oxide material can be covalently bonded to each other by one or more crosslinks. In some embodiments, the graphene oxide material can be bonded to the support covalently and/or by Van der Waals forces. In some embodiments, the crosslinks can be a product of a crosslinker. In some embodiments, the crosslinker material can be a polymer. In some embodiments, the polymer can comprise a crystalline polymer, an amorphous polymer, and/or a semi-crystalline polymer. In some embodiments, the polymer can comprise polyvinyl alcohol. In some embodiments, the crosslinker material comprises one or more biologically derived polymers or biopolymers, such as water-soluble anionic polyelectrolyte polymers (e.g., lignosulfonates ("LSU")). In some embodiments, the crosslinker comprises one or more acrylamide-based polymers or acrylamide co-polymers, such as poly(N-isopropylacrylamide). A specific example of such a polymer is poly(N-isopropylacrylamide-co-N,N'-methylene-bis-acrylamide) ("Poly (NIPAM-MBA)"). In some embodiments, one or more polymer crosslinkers are used in conjunction with one or more other crosslinkers. Such other crosslinkers can include potassium tetraborate ("KBO"), 3,5-diaminobenzoic acid ("DABA"), and 2,5-dihydroxyterephthalic acid ("DHTA") just to name a few.

In some embodiments, the crosslinker material comprises an aqueous solution of about 2 wt% to about 50 wt% crosslinker. In some embodiments, the crosslinker material comprises an aqueous solution of about 2.5 wt% to about 30 wt% crosslinker. In some embodiments, the crosslinker material comprises an aqueous solution of about 5 wt% to about 15 wt% crosslinker.

In some embodiments, the mass ratio of the graphene material to the crosslinker material can range from about 1:1000 to about 10:1. In some embodiments, the mass ratio of graphene material to the polymer material can range from about 1:100 to about 5:1, or about 3:100.

In some embodiments, the support can be a part of the membrane. Non limiting examples of such supports include reverse osmosis membranes, tapes, or anything that can be used as a substrate, either flexible or non-flexible. In some embodiments, the support material may be polymeric. In some embodiments, the support material can comprise hollow fibers. In other embodiments, the support can be the article to be protected from microbial growth. In some embodiments, the article to be protected can be any item where biological growth is undesirable. Examples include but are not limited to ship hull's, treatment basins, pipes, desalination filters, air filters, HVAC system components, hospital equipment and furnishings, counter-tops, lavatory furnishings, and the like.

In some embodiments, where the support may comprise a porous material. In some embodiments, the support can comprise a non-porous material. In some embodiments, the material may be polymeric. In some embodiments, the polymer may be polyamide, polyvinylidene fluoride, polyethylene terephthalate, polysulfone, polyether sulfone, and/or mixtures thereof. In some embodiments, the porous support can comprise a polyamide (e.g. Nylon). In some embodiments, the porous material may be a polysulfone based ultrafiltration membrane. In some embodiments, the porous material can be polyvinylidene fluoride. In some embodiments, the porous material may comprise hollow fibers. The hollow fibers may be cast or extruded. The hollow fibers may be made, for example, as described in United States Patent Nos, 4,900,626; 6,805,730 and United States Patent Publication No. 2015/0165,389, which are incorporated by reference in their entireties.

In some embodiments, the gas permeability of the membrane may be less than 0.100 cc/m²-day, 0.010 cc/m²-day, and/or 0.005 cc/m²-day. A suitable method for determining gas permeability is disclosed in United States Patent Publication US2014/0272,350, ASTM D3985, ASTM F1307, ASTM 1249, ASTM F2622, and/or ASTM F1927, which are incorporated by reference in their entireties for their disclosure of determining gas (oxygen) permeability %, e.g., oxygen transfer rate (OTR).

In some embodiments, the moisture permeability of the membrane may be greater than than 10.0 gm/m²-day, 5.0 gm/m²-day, 3.0 gm/m²-day, 2.5 gm/m²-day, 2.25 gm/m²-day and/or 2.0 gm/m²-day. In some embodiments, the moisture permeablility may be a measure of water vapor permeability/transfer rate at the above described levels. Suitable methods for determining moisture (water vapor) permeability are disclosed in Caria, P. F., Ca test of Al2O3 gas diffusion barriers grown by atomic deposition on polymers, Applied Physics Letters 89, 031915-1 to 031915-3 (2006), ASTM D7709, ASTM F1249, ASTM398 and/or ASTME96, which are incorporated by reference in their entireties for disclosure of determining moisture permeability %, e.g., water vapor transfer rate (WVTR).

In some embodiments, the selective permeability of the membrane may be reflected in a ratio of permeabilities of water vapor and at least one selected gas, e.g., oxygen and/or nitrogen, permeabilities. In some embodiments, the membrane may exhibit a water-vapor permeability to gas permeability ratio, e.g, WVTR/OTR, of greater than 50, greater than 100, greater than 200, and/or greater than 400. In some embodiments, the selective permeability may be a measure of water vapor: gas permeability/transfer rate ratios at the above described levels. Suitable methods for determining water vapor permeability and/or gas permeability have been disclosed above

In some embodiments, the membrane can have anti-microbial properties, or preclude the growth of microbes in a working fluid. In some embodiments, the microbes precluded from growing can comprise *escherichia coli* (ATCC® 8739, American Type Culture Collection (ATCC), Manassas, VA USA). In some embodiments, the membrane can have an antibacterial effectiveness of 2.0 or more. The antibacterial effectiveness can be determined by standard JIS Z 2801 (2010). In some embodiments, the working fluid can be either liquid, gas, or a combination thereof (e.g., saturated air). Non-limiting examples of a liquid working fluid can be the brine/salt water or fresh water in a desalination plant, water in a waste treatment plant, ocean water for a ship, air in a HVAC system, or air in an enclosed space.

In some embodiments, the anti-microbial membrane may be disposed between an object to be protected and a fluid reservoir. In some embodiments, the fluid reservoir can contain microbes. In some embodiments, the membrane can preclude the growth of microbes on the membrane.

In some embodiments of the anti-microbial element, the composite coating further comprises sufficient acid to effect hydrolysis condensation. In some embodiments, about 0.05 ml to about 5 ml of 1N HCI may be added to about 1 gm to about 20 gm of 0.01 wt% graphene oxide aqueous dispersion, about 1 gm to about 20 g of 10 wt% PVA aqueous solution in TEOS, at about 5 wt% to PVA. For example, 11.5 g of the 0.01 wt% graphene oxide aqueous dispersion may be added to a mixture of 11.5 g of 10 wt% PVA aqueous solution (Aldrich, St. Louis, MO, USA); 0.065 g, or 5 wt% to PVA, TEOS (Aldrich); and 0.2 mL 1N HCI aqueous solution (Aldrich).

In some embodiments, the anti-microbial element may also comprise a dispersant. In some embodiments, the dispersant may be ammonium salts, e.g., NH₄Cl; Flowlen; fish oil; long chain polymers; steric acid; oxidized Menhaden Fish Oil (MFO); dicarboxylic acids such as but not limited to succinic acid, ethanedioic acid, propanedioic acid, pentanedioic acid, hexanedioic acid, heptanedioic acid, octanedioic acid, nonanedioic acid, demayedioic acid, o-phthalic acid, and p-phthalic acid; sorbitan monooleate; and mixtures thereof. Some embodiments use oxidized MFO as a dispersant.

In some embodiments, the anti-microbial element may also comprise plasticizers. In some embodiments, the plasticizers may be Type 1 Plasticizers which may generally decrease the glass transition temperature (T_{g}), e.g. makes it more flexible, phthalates (n-butyl, dibutyl, dioctyl, butyl benzyl, missed esters, and dimethyl); and/or Type 2 Plasticizers, which may enable more flexible, more deformable layers, and perhaps reduce the amount of voids resulting from lamination, e.g., glycols (polyethylene; polyalkylene; polypropylene; triethylene; dipropylglycol benzoate).

Type 1 Plasticizers may include, but are not limited to butyl benzyl phthalate, dicarboxylic/tricarboxylic ester-based plasticizers such as but not limited to phthalate-based plasticizers such as but not limited to bis(2-ethylhexyl) phthalate, diisononyl phthalate, bis(n-butyl)phthalate, butyl benzyl phthalate, diisodecyl phthalate, di-n-octyl phthalate, diisooctyl phthalate, diethyl phthalate, diisobutyl phthalate, di-n-hexyl phthalate and mixtures thereof; adipate-based plasticizers such as but not limited to bis(2-ethylhexyl)adipate, dimethyl adipate, monomethyl adipate, dioctyl adipate and mixtures thereof; sebacate-based plasticizers such as but not limited to dibutyl sebacate, and maleate.

Type 2 Plasticizers may include, but not limited to dibutyl maleate, diisobutyl maleate and mixtures thereof, polyalkylene glycols such as but not limited to polyethylene glycol, polypropylene glycol and mixtures thereof. Other plasticizers which may be used include but are not limited to benzoates, epoxidized vegetable oils, sulfonamides such as but not limited to N-ethyl toluene sulfonamide, N-(2-hydroxypropyl)benzene sulfonamide, N-(n-butyl)benzene sulfonamide, organophosphates such as but not limited to tricresyl phosphate, tributyl phosphate, glycols/polyethers such as but not limited to triethylene glycol dihexanoate, tetraethylene glycol diheptanoate and mixtures thereof; alkyl citrates such as but not limited to triethyl citrate, acetyl triethyl citrate, tributyl citrate, acetyl tributyl citrate, trioctyl citrate, acetyl trioctyl citrate, trihexyl citrate, acetyl trihexyl citrate, butyryl trihexyl citrate, trimethyl citrate, alkyl sulphonic acid phenyl ester and mixtures thereof.

In some embodiments, solvents may also be present in the anti-microbial element. Used in manufacture of material layers, solvents include, but are not limited to, water, a lower alkanol such as but not limited to ethanol, methanol, isopropyl alcohol, xylenes, cyclohexanone, acetone, toluene and methyl ethyl ketone, and mixtures thereof. Some embodiments use a mixture of xylenes and ethanol for solvents.

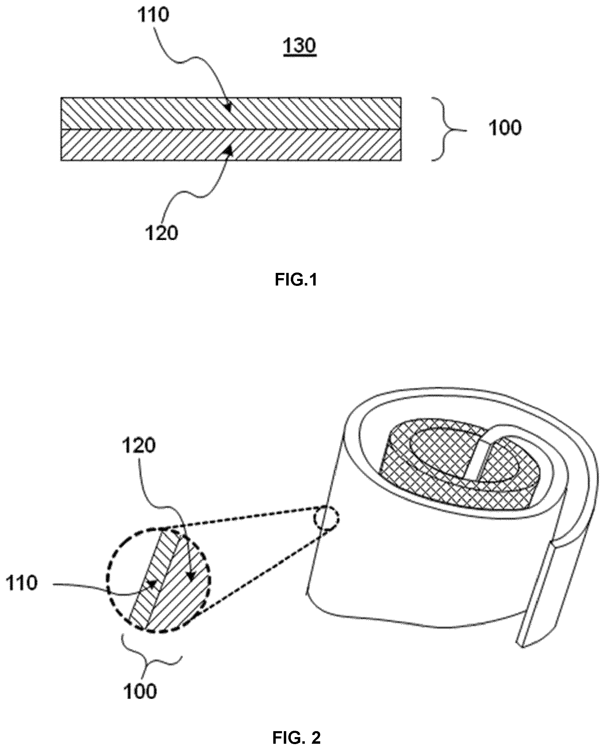

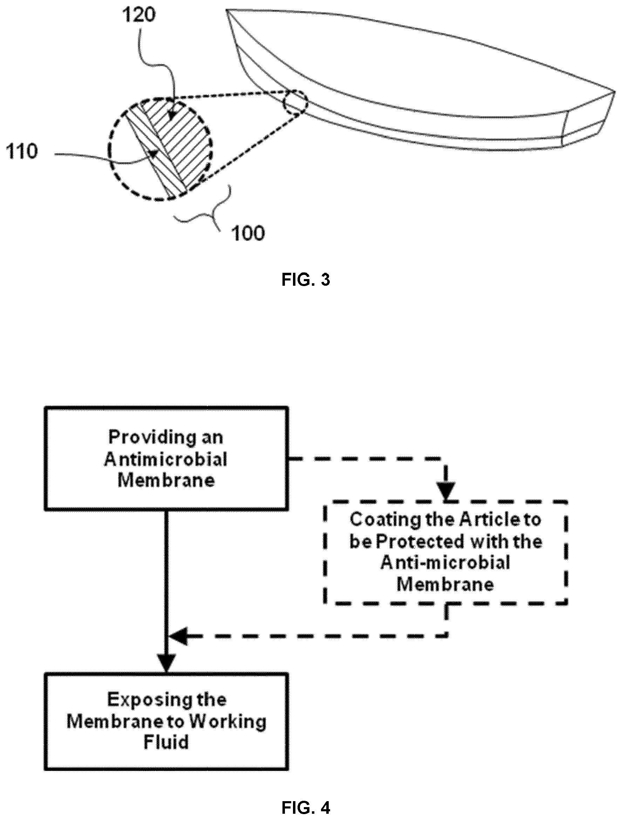

In an embodiment, as seen in Figure 1, the anti-microbial membrane **100,** may comprise at least a substrate element, **120,** and the aforementioned composite coating, **110.** The coating is exposed to the working fluid, **130.** In some embodiments, as shown in Figures 2 and 3, the substrate, **120,** can comprise the article to be protected. In Figure 2 the article to be protected is a reverse osmosis membrane and the membrane is on the surface of the membrane. In Figure 3 the article to be protected is the hull of a ship and the membrane is a coating on the hull. As a result of the membrane the growth of microbes on said membrane, and on the protected article, can be precluded.

In some embodiments, a material may be included in the anti-microbial membrane **100** to increase or improve the interaction membrane **100** has with the working fluid **130.** In some embodiments, the added material or spacer material may improve the flux or movement of the working fluid over or through membrane **100.** In some embodiments, the added material creates space or volume within the anti-microbial membrane **100.** In some embodiments, the added material creates or increases the roughness or irregularity of the surface of the anti-microbial membrane **100.** In some embodiments, the added material is silica, such as silica nanoparticles, or another suitable material that creates the desired fluid flux or surface texture. In some embodiments utilizing silica particles or nanoparticles, the size of the particles can be between 1 nm and 500 nm, between 40 nm and 300 nm, or between 70 nm and 250 nm. In some embodiments, the particle size is 5 nm, 7 nm, 10 nm, 20 nm, 60 nm, 80 nm, 100 nm, 120 nm, 140 nm, 160 nm, 180 nm, 200 nm, or 220 nm. In addition, other nanoparticles having similar size and behavioral characteristics include nanoparticles of Fe₃O₄, TiO₂, ZrO₂, or Al₂O₃. In some embodiments, the spacer material has a weight percentage of about 1% to about 10% relative to the total weight of composite coating **110.** In some embodiments, the spacer material has a weight percentage of about 6% or about 6.6% relative to the total weight of composite coating **110.**

In some embodiments, composite coating **110** has a thickness ranging from about 10 nm to about 10 µm. Composite coating **110** can have a thickness of 50 nm, 100 nm, 110 nm, 150 nm, 180 nm, 200 nm, 220 nm, 300 nm, 400 nm, 500 nm, 600 nm, 1 µm, 1.4 µm, 5 µm, or any value close to or between these values. In some embodiments, the thickness is less than about 20 µm, less than about 15 µm, less than 10, or less than about 5 µm. In some embodiments, composite coating **110** is not thick enough to be self-supported. In other words, in some embodiments, composite coating **110** must be applied to or adhered to a support structure or surface, such as substrate element **120.**

In some embodiments, membrane **100** is prepared by applying composite coating **110** to substrate element **120** and then exposing the resulting membrane to an elevated temperature for a period time. In some embodiments, this process cures membrane **100.** In some embodiments, after being applied to substrate element **120** composite coating **110** is allowed to air dry for a period of time before being exposed to an elevated temperature. In some embodiments, the elevated temperature ranges from about 30 °C to about 300 °C, from about 60 °C to about 200 °C, or from about 70 °C to about 150 °C. In some embodiments, the elevated temperature is about 70 °C, about 85 °C, about 90 °C, about 130 °C, about 140 °C, or any value close to or between these values. In some embodiments, the period of exposure is from about 1 minute to about 180 minutes, from about 2 minutes to about 150 minutes, from about 3 minutes to about 120 minutes. In some embodiments, the period of exposure is about 3 minutes, about 6 minutes, about 8 minutes, about 20 minutes, about 30 minutes, about 60 minutes, about 90 minutes, about 120 minutes, or any value close to or between these values.

### Method for Preventing Microbial Growth

In some embodiments, a method for preventing microbial growth on a surface can be described, as shown in Figure 4. In some embodiments, the method can comprise providing any of aforedescribed antimicrobial membranes. In some embodiments, providing any of the aforedescribed membranes can comprise coating the surface to be protected with any of the said membranes. In some embodiments, the membrane can comprise a composite coating. In some embodiments, the membrane can comprise a support and a composite coating on the support material. In some embodiments, the composite coating can comprise graphene oxide and a crosslinker. In some embodiments, the crosslinker can be a polyvinyl alcohol. In some embodiments, the mass ratio of graphene oxide to crosslinker can be from 1:1000 to 10:1. In some embodiments, the mass ratio of graphene material to crosslinker can range from about 1:100 to about 5:1, or about 3:100. In some embodiments, the support can be porous. In other embodiments, the support can be non-porous. In some embodiments, the support can be part of the coating. In other embodiments, the support can be separate from the coating. In some embodiments, where the support is separate from the coating, the support can comprise the article to be protected from microbial growth. Examples include but are not limited to ship hull's, treatment basins, pipes, desalination filters, air filters, HVAC system components, hospital equipment and furnishings, counter-tops, lavatory furnishings, and the like.

In some embodiments, the method further comprises exposing the membrane to a working fluid. In some embodiments, the working fluid can contain microbes, whereby the membrane precludes microbial growth as a result of exposure to the working fluid. In some embodiments, the microbes controlled can comprise *escherichia coli* (ATCC® 8739, ATCC). In some embodiments, the membrane can have an antibacterial effectiveness of 2.0 or more. The antibacterial effectiveness can be determined by standard JIS Z 2801 (2012). In some embodiments, the working fluid can comprise air. In some embodiments, the working fluid can comprise water. In some embodiments, the working fluid can comprise a mixture of air and water vapor. In some embodiments, the mixture of air and water vapor can range from about 100 % relative humidity to about 0 % relative humidity.

### EXAMPLES

It has been discovered that embodiments of the anti-microbial membrane elements described herein have improved resistance to microbes. These benefits are further shown by the following examples, which are intended to be illustrative of the embodiments of the disclosure, but are not intended to limit the scope or underlying principles in any way.

### Example 1.1: Preparation of Graphene Oxide

**GO Preparation:** GO was prepared from graphite using modified Hummers method. Graphite flake (2.0g, Aldrich, 100 mesh) was oxidized in a mixture of NaNOs (2.0g), KMnO₄ (10g) and concentrated 98% H₂SO₄ (96 mL) at 50 °C for 15 hrs. The resulting pasty mixture was then poured into ice (400g) followed by the addition of 30% hydrogen peroxide (20 mL). The resulting solution was stirred for 2 hrs. to reduce the manganese dioxide, filtered through filter paper, and washed with deionized (DI) water. The solid was collected and dispersed in DI water by stirring, centrifuged at 6300 rpm for 40 min, and demayted the aqueous layer. The remaining solid was dispersed in DI water, and washing process repeated 4 times. The purified GO was then dispersed in DI water under sonication (20 W) for 2.5 hrs. for a GO dispersion (0.4% wt).

### Example 1.2: Preparation of Anti-Microbial Element

**GO-PVA membrane (AM-1) preparation:** 4 mg/mL of a graphene oxide (GO) aqueous dispersion prepared as described in Example 1.1 was diluted to 0.1 wt% by de-ionized water. Then, 32.0 g of the resulting 0.1 wt% graphene oxide aqueous dispersion was added to a mixture consisting of 40.0 g of 2.5 wt% PVA aqueous solution (Aldrich). The resulting mixture was then stirred at room temperature for 10 minutes. The resulting solution was cast onto a Reverse Osmosis (RO) membrane (ESPA Membrane, Hydranautics) by dropping the solution on the membrane surface, 0.6 g per 90 cm². After drying in air, the membrane was put in an oven at 85 °C for 30 minutes in order to remove water and crosslink the membrane, resulting in a membrane that was 1.4 µm thick with GO/PVA in mass ratios of 3.1 wt% and 96.9 wt% respectively (or 1 : 31.26), or **AM-1.**

### Comparative Example 1.1: Preparation of Stock Substrate

**Hydranautics membrane (CM-1) preparation:** In another example (**CM-1**), a membrane was cut from stock reverse osmosis (RO) membrane from Hydranautics (ESPA Membrane, Hydranautics).

### Example 2.1: Measurement of Anti-Microbial Properties.

To test the membrane anti-microbial, example **AM-1** was measured using a procedure that conformed to Japanese Industrial Standard (JIS) Z 2801:2012 (English Version pub. Sep. 2012) for testing anti-microbial product efficacy, which is incorporated herein in its entirety. The organisms used in the verification of antimicrobial capabilities were *escherichia coli.* (ATCC® 8739, ATCC).

For the test, a broth was prepared by suspending 8 g of the nutrient powder (Difco^{TM} Nutrient Broth, Becton, Dickinson and Company, Franklin Lakes, NJ USA) in 1 L of filtered, sterile water, mixing thoroughly and then heating with frequent agitation. To dissolve the powder the mixture was boiled for 1 minute and then autoclaved at 121 °C for 15 minutes. The night before testing, the *escherichia coli.* were added to 2-3 mL of the prepared broth and grown overnight.

On the day of the test, the resulting culture was diluted in fresh media and then allowed to grow to a density of 10⁸ CFU/mL (or approximately diluting 1 mL of culture into 9 mL of fresh nutrient broth). The resulting solution was then left to re-grow for 2 hours. The re-growth was then diluted by 50 times in sterile saline (NaCl 8.5 g (Aldrich) in 1 L of distilled water) to achieve an expected density of about 2 x 10⁶ CFU/mL. 50 µL of the dilute provides the inoculation number.

The samples were then cut into 1 inch by 2 inch squares and placed in a petri dish with the GO-coated side up. Then 50 µL of the dilute was taken and the test specimens were inoculated. A transparent cover film (0.75 in. x 1.5 in., 3M, St. Paul, MN USA) was then used to help spread the bacterial inoculums, define the spread size, and reduce evaporation. Then, the petri dish was covered with a transparent lid, and left so the bacteria could grow.

When the desired measurement points of 2 hours and 24 hours were achieved, the test specimens and cover film were transferred with sterile forceps into 50 mL conical tubes with 20 mL of saline and the bacteria for each sample was washed off by mixing them for at least 30 seconds in a vortex mixer (120V, VWR Arlington Heights, IL USA). The bacteria cells in each solution were then individually transferred using a pump (MXPPUMP01, EMD Millipore, Billerica, MA USA) combined with a filter (Millflex-100, 100 mL, 0.45 µm, white gridded, MXHAWG124, EMD Millipore) into individual cassettes prefilled with tryptic soy agar (MXSMCTS48, EMD Millipore).

Then the cassettes were inverted and placed in an incubator at 37 °C for 18 hours. After 18 hours, the number of colonies on the cassettes was counted. If there were no colonies a zero was recorded. For untreated pieces, after 24 hours the number of colonies was not less than 1 x 10³ colonies.

The results of the test bacterium are presented in Table 1. The tests were run three times and in all three counts the organism count was zero in the experimental sample **AM-1,** while for both control samples (**CM-1** washed and **CM-1** unwashed) the organism count was too numerous to count (TNTC). This data supports an antibacterial activity of 2.0 or higher. As a result, it was determined that the GO-PVA coating, **AM-1,** is an effective biocide that could help prevent microbe buildup on surfaces.

**Table 1: Antimicrobial effect of graphene coatings.**

| **Material** | **1^{st} Count** | **2^{nd} Count** | **3^{rd} Count** | **Comment** |
|---|---|---|---|---|
| **CM-1 RO Membrane (Washed)** | TNTC | TNTC | TNTC | Negligible Microbes Killed |
| **CM-1 RO Membrane (Non-washed)** | TNTC | TNTC | TNTC | Negligible Microbes Killed |
| **AM-1 GO+PVA/RO Membrane** | 0 | 0 | 0 | All Microbes Killed |
| Note: TNTC - too numerous to count. | | | | |

### Example 3.1: Preparation and Testing of additional Anti-Microbial Elements

A number of antimicrobial elements were prepared in a manner similar to **AM-1** using different crosslinkers in varying ratios and deposited in varying thicknesses. In some samples, additional crosslinkers or other materials were used to test the effect of those materials on the performance. The details of each antimicrobial element and the results obtained for each are shown in Table 2 below.

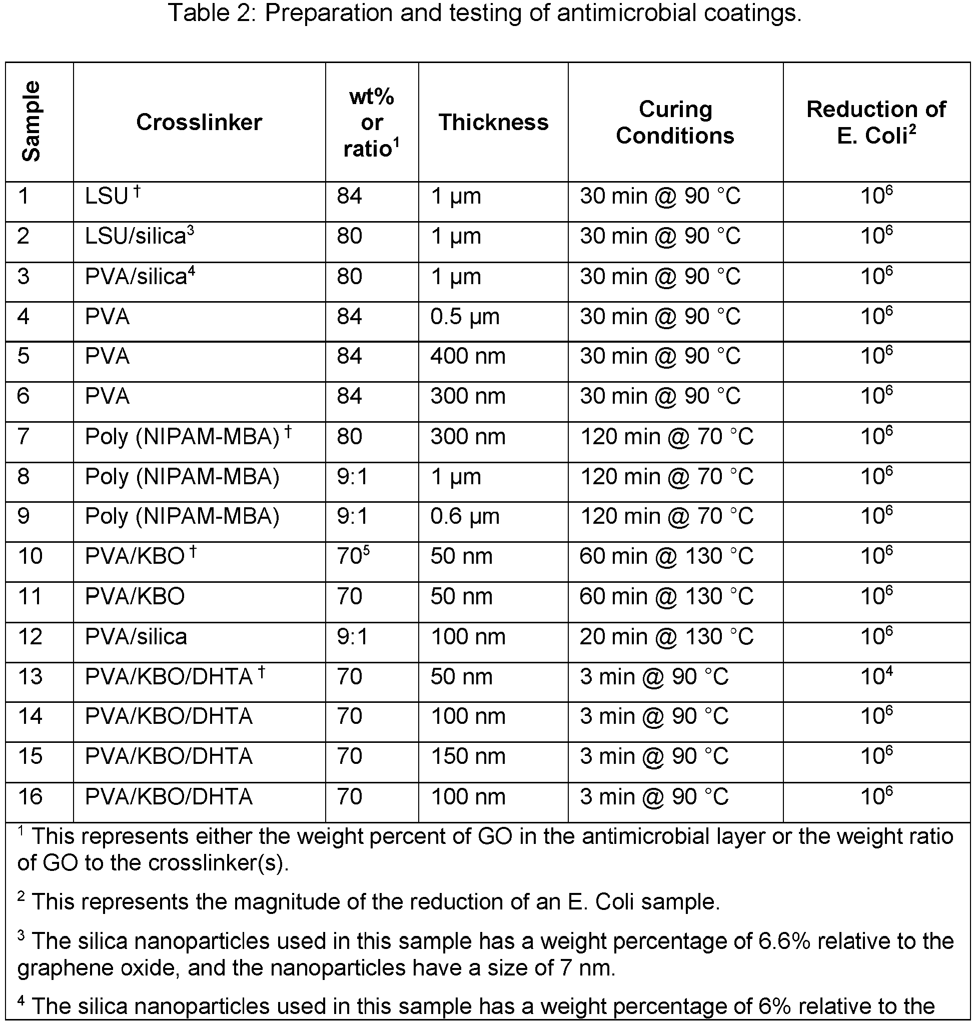

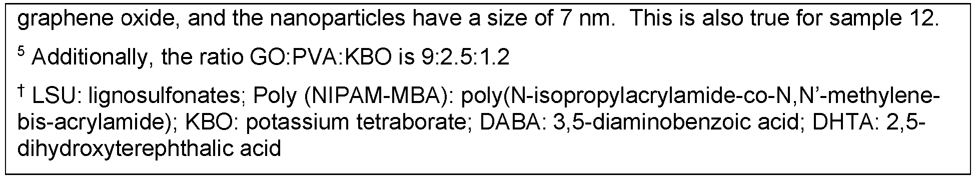

### EMBODIMENTS

The authors of the present disclosure contemplate a number of different embodiments including at least the following:
**Embodiment 1.** An anti-microbial membrane comprising:
   a support; and
   a composite comprising a graphene oxide compound and a crosslinker,
   where the composite coats the support;
   wherein the membrane precludes the growth of microbes as determined by having an antibacterial effectiveness of 2.0 or more; and
   wherein the crosslinker comprises at least one of polyvinyl alcohol, a biopolymer, an acrylamide co-polymer.
**Embodiment 2.** The membrane of embodiment 1, wherein the biopolymer comprises lignosulfonates, and the acrylamide co-polymer comprises poly(N-isopropylacrylamide).
**Embodiment 3.** The membrane of embodiment 1 or 2, wherein the acrylamide co-polymer comprises poly(N-isopropylacrylamide-co-N,N'-methylene-bisacrylamide).
**Embodiment 4.** The membrane of embodiment 1, 2, or 3, wherein the composite further comprises at least one of potassium tetraborate, 3,5-diaminobenzoic acid, and 2,5-dihydroxyterephthalic acid.
**Embodiment 5.** The membrane of embodiment 1, 2, 3, or 4, wherein the composite further comprises a spacer material.
**Embodiment 6.** The membrane of embodiment 5, wherein the spacer material comprises nanoparticles of silica, Fe₃O₄, TiO₂, ZrO₂, or Al₂O₃.
**Embodiment 7.** The membrane of embodiment 5 or 6, wherein the spacer material has a particle size ranging from about 5 nm to about 300 nm.
**Embodiment 8.** The membrane of embodiment 5, 6, or 7, wherein the spacer material has a weight percentage of about 3% to about 8% relative to the composite coating.
**Embodiment 9.** The membrane of embodiment 5, 6, or 7, wherein the spacer material has a weight percentage of about 5% to about 7% relative to the composite coating.
**Embodiment 10.** The membrane of embodiment 1, 2, 3, 4, 5, 6, 7, 8, or 9, where the mass ratio of the graphene oxide to the crosslinker in the composite is a value ranging from 1:1000 to 20:1.
**Embodiment 11.** The membrane of embodiment 1, 2, 3, 4, 5, 6, 7, 8, or 9, wherein the mass ratio of the graphene oxide to the crosslinker in the composite is a value ranging from 10:1 to 1:90.
**Embodiment 12.** The membrane of embodiment 1, 2, 3, 4, 5, 6, 7, 8, or 9, wherein the mass ratio of the graphene oxide to the crosslinker in the composite is a value ranging from 10:1 to 8:1.
**Embodiment 13.** The membrane of embodiment 1, 2, 3, 4, 5, 6, 7, 8, 9, 10, 11, or 12, wherein the composite coating on the support has a thickness of about 0.01 µm to about 4.5 µm.
**Embodiment 14.** The membrane of embodiment 1, 2, 3, 4, 5, 6, 7, 8, 9, 10, 11, or 12, wherein the composite coating on the support has a thickness of about 0.05 µm to about 3 µm.
**Embodiment 15.** The membrane of embodiment 1, 2, 3, 4, 5, 6, 7, 8, 9, 10, 11, or 12, wherein the composite coating on the support has a thickness of about 0.05 µm to about 0.6 µm.
**Embodiment 16.** The membrane of embodiment 1, 2, 3, 4, 5, 6, 7, 8, 9, 10, 11, 12, 13, 14, or 15, wherein the membrane is prepared by applying the composite to the support and exposing the resulting membrane to a temperature of about 60 °C to about 200 °C for a period of about 2 minutes to about 150 minutes.
**Embodiment 17.** The membrane of embodiment 1, 2, 3, 4, 5, 6, 7, 8, 9, 10, 11, 12, 13, 14, or 15, wherein the membrane is prepared by applying the composite to the support and exposing the resulting membrane to a temperature of about 70 °C to about 150 °C for a period of about 3 minutes to about 120 minutes.
**Embodiment 18.** The membrane of embodiment 1, 2, 3, 4, 5, 6, 7, 8, 9, 10, 11, 12, 13, 14, 15, 16, or 17, where the support is an article to be protected from microbial growth.
**Embodiment 19.** The membrane of embodiment 1, 2, 3, 4, 5, 6, 7, 8, 9, 10, 11, 12, 13, 14, 15, 16, 17, or 18, wherein the crosslinker is polyvinyl alcohol and the composite has a thickness of about 50 nm to about 3 µm.
**Embodiment 20.** The membrane of embodiment 19, wherein the composite further comprises potassium tetraborate and the composite has a thickness of about 50 nm to about 150 nm.
**Embodiment 21.** The membrane of embodiment 20, wherein the composite further comprises 2,5-dihydroxyterephthalic acid, the content of graphene oxide relative to the total composite is about 60 wt% to about 80 wt%, and the composite has a thickness of about 50 nm to about 150 nm.
**Embodiment 22.** The membrane of embodiment 19, wherein the composite further comprises 3,5-diaminobenzoic acid and the composite has a thickness of about 700 nm to about 2 µm.
**Embodiment 23.** The membrane of embodiment 1, 2, 3, 4, 5, 6, 7, 8, 9, 10, 11, 12, 13, 14, 15, 16, 17, or 18, wherein the crosslinker comprises a biopolymer and the composite has a thickness of about 100 nm to about 2 µm.
**Embodiment 24.** The membrane of embodiment 1, 2, 3, 4, 5, 6, 7, 8, 9, 10, 11, 12, 13, 14, 15, 16, 17, or 18, wherein the crosslinker comprises a poly(N-isopropylacrylamide) and the composite has a thickness of about 700 nm to about 2 µm.
**Embodiment 25.** The membrane of embodiment 1, 2, 3, 4, 5, 6, 7, 8, 9, 10, 11, 12, 13, 14, 15, 16, 17, 18, 19, 20, 21, 22, 23, or 24, wherein the composite further comprises silica nanoparticles.
**Embodiment 26.** The membrane of embodiment 25, wherein the silica nanoparticles have a size of about 2 nm to about 20 nm, about 50 nm to about 100 nm, or about 150 nm to about 300 nm.
**Embodiment 27.** The membrane of embodiment 25, wherein the silica nanoparticles have a size of about 5 nm to about 10 nm, about 70 nm to about 9 nm, or about 180 nm to about 220 nm.
**Embodiment 28.** A method of preventing microbial growth, the method comprising:
   providing the membrane of embodiment 1, 2, 3, 4, 5, 6, 7, 8, 9, 10, 11, 12, 13, 14, 15, 16, 17, 18, 19, 20, 21, 22, 23, 24, 25, 26, 27, or 28; and
   exposing the membrane to a working fluid containing microbes;
   wherein the membrane precludes microbial growth as a result of exposure to the working fluid as determined by having an antibacterial effectiveness of 2.0 or more.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained. At the very least, and not as an attempt to limit the application of the doctrine of equivalents to the scope of the claims, each numerical parameter should at least be construed in light of the number of reported significant digits and by applying ordinary rounding techniques.

The terms "a," "an," "the" and similar referents used in the context of describing the embodiments of the present disclosure (especially in the context of the following claims) are to be construed to cover both the singular and the plural, unless otherwise indicated herein or clearly contradicted by context. All methods described herein may be performed in any suitable order unless otherwise indicated herein or otherwise clearly contradicted by context. The use of any and all examples, or exemplary language (e.g., "such as") provided herein is intended merely to better illuminate the disclosed embodiments and does not pose a limitation on the scope of any claim. No language in the specification should be construed as indicating any non-claimed element essential to the practice of the disclosed embodiments.

Groupings of alternative elements or embodiments disclosed herein are not to be construed as limitations. Each group member may be referred to and claimed individually or in any combination with other members of the group or other elements found herein. It is anticipated that one or more members of a group may be included in, or deleted from, a group for reasons of convenience and/or patentability.

Certain embodiments are described herein, including the best mode known to the author(s) of the present disclosure for carrying out the spirit of the present disclosure. Of course, variations on these described embodiments will become apparent to those of ordinary skill in the art upon reading the foregoing description. The author(s) expects skilled artisans to employ such variations as appropriate, and the author(s) intends for the disclosed embodiments to be practiced otherwise than specifically described herein. Accordingly, the claims include all modifications and equivalents of the subject matter recited in the claims as permitted by applicable law. Moreover, any combination of the above-described elements in all possible variations thereof is contemplated unless otherwise indicated herein or otherwise clearly contradicted by context.

In closing, it is to be understood that the embodiments disclosed herein are illustrative of the principles of the claims. Other modifications that may be employed are within the scope of the claims. Thus, by way of example, but not of limitation, alternative embodiments may be utilized in accordance with the teachings herein. Accordingly, the claims are not limited to embodiments precisely as shown and described.

## Claims

1. An anti-microbial membrane comprising:
a support; and
a composite comprising a graphene oxide compound and a crosslinker,
where the composite coats the support;
wherein the membrane precludes the growth of microbes as determined by having an antibacterial effectiveness of 2.0 or more as measured by JIS Z 2801; and
wherein the crosslinker comprises polyvinyl alcohol; and
wherein the composite further comprises potassium tetraborate, 3,5-diaminobenzoic acid, and 2,5-dihydroxyterephthalic acid, or any combination thereof.

2. The membrane of claim 1, wherein the composite comprises potassium tetraborate and 2,5-dihydroxyterephthalic acid.

3. The membrane of claim 1 or 2, wherein the composite further comprises a spacer material.

4. The membrane of claim 3, wherein the spacer material comprises nanoparticles of silica, Fe₃O₄, TiO₂, ZrO₂, or Al₂O₃.

5. The membrane of claim 3 or 4, wherein the spacer material has a particle size ranging from about 5 nm to about 300 nm.

6. The membrane of claim 3, 4, or 5, wherein the spacer material has a weight percentage of about 3% to about 8% relative to the composite coating.

7. The membrane of claim 1, 2, 3, 4, 5, or 6, where the mass ratio of the graphene oxide to the crosslinker in the composite is a value ranging from 1:1000 to 20:1.

8. The membrane of claim 1, 2, 3, 4, 5, 6, or 7, wherein the mass ratio of the graphene oxide to the crosslinker in the composite is a value ranging from 10:1 to 1:90.

9. The membrane of claim 1, 2, 3, 4, 5, 6, 7, or 8, wherein the mass ratio of the graphene oxide to the crosslinker in the composite is a value ranging from 10:1 to 8:1.

10. The membrane of claim 1, 2, 3, 4, 5, 6, 7, 8, or 9, wherein the composite coating on the support has a thickness of about 0.01 µm to about 4.5 µm.

11. The membrane of claim 1, 2, 3, 4, 5, 6, 7, 8, 9, or 10, wherein the composite coating on the support has a thickness of about 0.05 µm to about 3 µm.

12. The membrane of claim 1, 2, 3, 4, 5, 6, 7, 8, 9, 10, or 11, wherein the composite coating on the support has a thickness of about 0.05 µm to about 0.6 µm.

13. The membrane of claim 1, 2, 3, 4, 5, 6, 7, 8, 9, 10, 11, or 12, wherein the membrane is prepared by applying the composite to the support and exposing the resulting membrane to a temperature of about 70 °C to about 150 °C for a period of about 3 minutes to about 120 minutes.

14. The membrane of claim 1, 2, 3, 4, 5, 6, 7, 8, 9, 10, 11, 12, or 13, wherein the composite has a thickness of about 50 nm to about 150 nm.

15. A method of preventing microbial growth, the method comprising:
providing the membrane of claim 1, 2, 3, 4, 5, 6, 7, 8, 9, 10, 11, 12, 13, or 14; and
exposing the membrane to a working fluid containing microbes;
wherein the membrane precludes microbial growth as a result of exposure to the working fluid as determined by having an antibacterial effectiveness of 2.0 or more, as measured by JIS Z 2801.
